Europäisches Patentamt

European Patent Office

Office européen des brevets

(19)

(11) Veröffentlichungsnummer: **0 105 880**
**B1**

(12) **EUROPÄISCHE PATENTSCHRIFT**

(45) Veröffentlichungstag der Patentschrift:
**08.01.86**

(21) Anmeldenummer: **83901076.6**

(22) Anmeldetag: **29.03.83**

(86) Internationale Anmeldenummer:
**PCT/EP 83/00094**

(87) Internationale Veröffentlichungsnummer:
**WO 83/03336 (13.10.83** Gazette 83/24)

(51) Int. Cl.⁴: **A 23 B 7/04,** A 23 L 1/216

(54) **VERFAHREN ZUR HERSTELLUNG EINES TIEFGEFRORENEN PÜREES.**

(30) Priorität: **31.03.82 DE 3212035**

(43) Veröffentlichungstag der Anmeldung:
**25.04.84 Patentblatt 84/17**

(45) Bekanntmachung des Hinweises auf die Patenterteilung:
**08.01.86 Patentblatt 86/2**

(84) Benannte Vertragsstaaten:
**BE FR NL**

(56) Entgegenhaltungen:
**WO - A - 82/02652**
**US - A - 2 166 278**
**US - A - 2 185 451**
**US - A - 2 385 140**
**US - A - 2 597 067**

(73) Patentinhaber: **PFANNI-WERKE OTTO ECKART KG,**
**Grafinger Strasse 6, D-8000 München 80 (DE)**

(72) Erfinder: **PEPPERL, Thomas, Adalbert Stifter Strasse 35,**
**D-8192 Geretsried (DE)**

(74) Vertreter: **Patentanwälte Müller-Boré, Deufel, Schön,**
**Hertel, Lewald, Otto, Postfach 26 02 47 Isartorplatz 6,**
**D-8000 München 26 (DE)**

ACTORUM AG

## Beschreibung

Tiefgefrorene Kartoffelpürees sind bekannt. Einen Überblick geben W.F. Talbert, ORA Smith in „Potatoe Processing", AVI Publishing Company, Inc. (1975), S. 438. Diese Kartoffelpürees werden durch Blanchieren von Kartoffeln, Schneiden in etwa 1 cm dicke Scheiben und Kochen unter Zusatz von meist Magertrockenmilchfeststoffen püriert, dann extrudiert und auf etwa 15% Feuchtigkeitsgehalt getrocknet, leicht gemahlen, abgepackt und tiefgefroren. Das gefrorene Kartoffelpüree kann durch Zugabe von siedendem Wasser und gutes Mischen oder Eingeben in Wasser, meist unter Zusatz von Milch und Butter, und Aufschlagen servierfertig gemacht werden. Es wird vor allem in Krankenhäusern gerne als Diätmahlzeit benutzt.

Diese Art des tiefgefrorenen Kartoffelpürees bringt jedoch noch Probleme mit sich. Die Portionierbarkeit von Packungen, die nicht auf einmal insgesamt verbraucht werden, ist immer ungenau und vor allem, wenn beim Servierfertigmachen noch Bestandteile zugesetzt werden sollen, muss man diese Zusätze abschätzen, da man ja kaum jemals die aus der Packung abgenommene Menge an Püree wiegen wird. Das Püree soll somit frei portionierbar sein und durch blosses Erhitzen ohne Zusätze zuzubereiten sein. Ausserdem sind kurze Zubereitungszeiten erwünscht und das Püree darf während des Erhitzungsvorgangs nicht anbrennen. Während der Lagerung des Pürees in der geöffneten Packung im tiefgefrorenen Zustand darf keine Austrocknung der Oberfläche eintreten, weil dies die Zusammensetzung ändern und die Rehydratisierung beeinträchtigen würde.

Die US-A Nr. 2597067 zeigt die Herstellung eines solchen tiefgefrorenen Pürees und zeigt auch das häufig auftretende Problem des Anbrennens beim Erhitzen. Dort wird nämlich das Erhitzen im Wasserbad vorgeschrieben.

Es besteht daher ein Bedarf an der Beseitigung der oben erwähnten Nachteile, insbesondere wenn dies auch noch durch ein vereinfachtes Herstellungsverfahren möglich ist.

Es wurde nun gefunden, dass bei der standardmässigen Herstellung von pürierten, gekochten Kartoffeln mit üblichem Zusatz von Milch- und Fettbestandteilen sowie gegebenenfalls Emulgator und Butterfett, und Ausformen von Teilchen beliebiger Form, vorzugsweise Kugeln oder Zylinder, mit etwa Erbsen- oder Haselnussgrösse, nicht nur das teilweise Trocknen der ausgeformten Teilchen vor dem Frosten vermieden werden kann, was zu erheblichen Energieeinsparungen führt, sondern auch die Probleme beim Portionieren und Erwärmen gelöst werden können, wenn man die ausgeformten Teilchen, welche alle Bestandteile des späteren servierfertigen Pürees enthalten, vorfrostet, die Teilchen mit tiefkaltem Wasser besprüht oder in solchem Wasser taucht, zur Aushärtung des Wasserfilms an der Oberfläche nachfrostet und dann in loser Schüttung abpackt.

Der Ausdruck „tiefkaltes Wasser" bedeutet Wasser nahe am Gefrierpunkt, also ca. 0 bis 5°C. In der Praxis wird das Arbeiten bei 1 bis 2°C bevorzugt.

Die US-A Nr. 2385140 beschreibt ein Verfahren zur Herstellung von tiefgefrorenen Lebensmitteln, auf deren Oberfläche ein Eisfilm bei einer Temperatur etwa unter dem Gefrierpunkt von Wasser aufgebracht wird, worauf dann die Temperatur herabgesetzt und tiefgefroren wird.

Sinn dieser Verfahrensweise ist es, das tiefgefrorene Lebensmittel vor Austrocknung bei der anschliessenden Lagerung (Gefrierbrand) zu schützen. Ausserdem sollen damit Sauerstoffangriff (Ranzidität) und Schimmelpilzwachstum verhindert werden.

Dieses Überziehen von Lebensmitteln mit einer Eisschicht zum Zwecke einer Haltbarkeitsverbesserung ist Stand der Technik und wird als ‚Glasieren' bezeichnet (s. auch Techniklexikon: Verfahrenstechnik, Nahrungsmitteltechnik, Haushaltstechnik; Bd. 1, S. 186 und 187, Rowohlt Taschenbuchverlag GmbH, August 1972). Merkmal des Glasierens ist jedoch, dass der Eisüberzug nur als Schutzschicht dient und nicht als Bestandteil des Lebensmittels zu sehen ist.

Demgemass betrifft die Erfindung ein Verfahren zur Herstellung eines tiefgefrorenen Kartoffelpürees servierfertiger Zusammensetzung mit üblichem Zusatz von Milch- und Fettbestandteilen sowie gegebenenfalls Emulgatoren und Butterfett wobei gegarte, pürierte Kartoffeln mit den Zusatzstoffen vermischt, die Mischung extrudiert, zu kleinstückigen Teilchen ausgeformt und die Teilchen mit einer Eisschicht versehen und eingefroren werden, wobei die Teilchen zunächst so vorgefrostet werden, dass eine mindestens 2 bis 3 mm dicke, durchgefrorene Randschicht entsteht, die Teilchen dann mit sehr kaltem Wasser von 0 bis 5°C, insbesondere solchem von 0 bis 3°C behandelt und anschliessend tiefgefroren und gegebenenfalls abgepackt werden, wobei die beim Behandeln mit sehr kaltem Wasser entstehende Eisschicht so bemessen wird, dass sie die gegenüber dem Fertigpüree fehlende Wassermenge ausmacht.

Gemäss bevorzugten Ausführungsformen hat das sehr kalte Wasser eine Temperatur von 0 bis 3°C, erfolgt die Behandlung mit dem sehr kalten Wasser durch Besprühen oder Eintauchen der Teilchen in loser Schüttung, wird als Milchbestandteil eine konzentrierte Magermilchlösung, insbesondere eine mit bis zu 70% Wasser verwendet, wobei die Magermilchlösung insbesondere aus 60 bis 70% Wasser, 30 bis 36% Magermilchpulver und 3 bis 4% Speisesalz besteht, werden 20 bis 30%, bezogen auf pürierte Kartoffeln, an gelösten Milchbestandteilen und 1 bis 3% Emulgator und gegebenenfalls ca. 4% flüssiges Butterfett, beides bezogen auf pürierte Kartoffeln, zugesetzt. Die nachgefrorenen Püreeteilchen werden vorzugsweise in loser Schüttung abgepackt, obwohl natürlich auch eine grössere Zahl von portionierten Teilmengen in jeweils passenden kleinen Beuteln in einer Grosspackung vereinigt werden können.

Da die gefrorenen Püreeteilchen in der Packung als lose Schüttung vorliegen, ist eine Teilentnahme problemlos möglich. Weiterhin wird durch die grosse Oberfläche (gegenüber gefrorenem Püreeblock) eine schnelle Zubereitung ermöglicht. Durch intensives Rühren während der Zubereitung lässt sich die Zubereitungszeit weiterhin verkürzen, so das eine Zubereitungszeit von 2 bis 5 min genügt.

Das Püree in der Packung liegt schon in gebrauchsfertigem Zustand, also unter Einschluss aller sonst bei der Zubereitung zuzusetzenden Bestandteile wie Milch, Butter, Gewürze und dergleichen, vor, so dass man bei der Entnahme von Teilmengen aus einer Packung nicht mehr überlegen muss, wieviel Milch, Butter und dergleichen zuzusetzen ist.

Ein besonderer Vorteil dieser Herstellungsweise liegt in der Vermeidung des Anbrennens durch lokale Überhitzung am Boden des Zubereitungsgefässes. Dies wird durch Entstehen eines Wasserfilms beim Einbringen des gefrorenen Püreegranulats in das Zubereitungsgefäss durch Abschmelzen der Eisschicht an der Oberfläche der Teilchen erreicht. Dieser gefrorene Wasserfilm an der Oberfläche vermeidet eben auch das Erfordernis, weiteres Wasser (oder Milch) bei der Zubereitung zuzusetzen und diese Eisschicht verhindert das Austrocknen der Oberfläche der Teilchen bei Lagerung der geöffneten Packung im tiefgefrorenen Zustand.

Obwohl das Herstellungsverfahren sehr einfach ist und die Trocknungsstufe entfällt, wird nach kurzem Umrühren des erhitzten Pürees eine ausgezeichnete Konsistenz erreicht.

Die Herstellung des Pürees selbst erfolgt in bekannter Weise. Die Schwefelung in den gesetzlich zulässigen Grenzen ist wie im Stand der Technik von Vorteil. Es ist zweckmässig, ein einstufiges Garungsverfahren in strömendem Dampf von ca. 40 min Dauer anzuwenden und die Zerkleinerung, z. B. durch Pressen durch ein Gitter, erfolgt ebenfalls in üblicher Weise.

Den pürierten Kartoffeln wird in bekannter Weise eine Menge von ca. 20 bis 30% an gelösten Milchbestandteilen, bezogen auf die pürierten Kartoffeln selbst, zugesetzt. Der Zusatz von gelösten Milchbestandteilen hat technische Vorteile gegenüber dem Zusatz von Trockenmagermilch gemäss Stand der Technik.

Eine typische Zusammensetzung eines solchen Zusatzes von gelösten Milchbestandteilen ist wie folgt:

60-70% Wasser        65-68% Wasser
30-36% Magermilchpulver insbes.
       30-33% Magermilchpulver
2-4% Speisesalz        2% Speisesalz

Während Milch ca. 87% Wasser hat und bei jetzigen Präparaten Magermilchlösungen bzw. Suspensionen mit 75 bis 80% Wasser verwendet werden, bringt die Verwendung einer höher konzentrierten Zusammensetzung (ca. 68% Wasser) einen gewissen trocknenden Effekt auf das Püree mit sich, was dazu beiträgt, das Erfordernis zur Trocknung des Pürees vor dem Frosten zu vermeiden.

Die gegenüber dem Fertigpüree fehlende Wassermenge wird durch die gefrorene Eisschicht auf der Oberfläche zu der Gesamtzusammensetzung beigetragen.

Vorzugsweise werden 1 bis 3% Emulgator, bezogen auf pürierte Kartoffeln, zugesetzt, z. B. handelsübliche Mono- bzw. Diglyzeride, wie dies ebenfalls bekannt ist.

Weiterhin wird ein Zusatz von etwa 4% flüssigem Butterfett, bezogen auf pürierte Kartoffeln, bevorzugt.

Alle Zusätze werden in einem Mischer in der pürierten Kartoffelmasse verteilt und gut eingemischt.

Durch Pressen der Masse durch entsprechende Formdüsen (Püree-Extruder) wird die Masse in kleine Einheiten, vorzugsweise eine Art Granulat von etwa Erbsen- oder Haselnussgrösse, unterteilt.

Das Vorfrosten erfolgt z. B. in einem Tunnelgefrierapparat in loser Schüttung. Der Begriff „lose Schüttung" bedeutet eine einlagige Schicht sich nicht berührender Teilchen, so dass nicht einzelne Teilchen zusammenbacken. Die Teilchen verlassen den Froster mit einer mindestens 2 bis 3 mm dicken durchgefrorenen Randschicht. Der Frostungszustand muss derart sein, dass beim nachträglichen Aufsprühen von Wasser oder Eintauchen in Wasser kein Auftauen der Oberfläche erfolgt sondern das aufgebrachte Wasser schnell zu einer dünnen Schicht anfriert.

Durch das Besprühen oder Tauchen mit tiefkaltem Wasser, also Wasser zwischen 0 und 5°C, insbesondere 0 bis 3°C und vorzugsweise 1 bis 2°C, bildet sich auf den gefrorenen Püreeteilchen ein Wasserfilm, der beim Frosten in eine Eisschicht übergeht. Dieser Vorgang kann mehrmals wiederholt werden, wenn man eine dickere Eishülle haben will. Die Eishülle wird aber aus praktischen Gründen 1 mm kaum übersteigen. Es wird so viel Wasser zugegeben, dass hinterher kein Wasser mehr benötigt wird, um das Püree servierfertig zu machen.

Die Zeitdauer sowohl für das Vorfrosten als auch für das Nachfrosten beträgt, je nach Grösse der Püreeteilchen, vorzugsweise 10-15 min. Üblicherweise sind Vorfrost- und Nachfrostzeit gleich lang. Die durch eine Nachfrostung zur Aushärtung des Wasser- bzw. Eisfilms an der Oberfläche in einen nicht backenden und nicht klebenden Zustand überführten Teilchen werden dann in üblicher Weise in loser Schüttung in geeignete Behältnisse abgepackt und unter Frostung gehalten.

Das folgende Beispiel erläutert die Erfindung.

*Beispiel:*

Kartoffeln werden in üblicher Weise, wie für die Püreeherstellung bekannt, geschält, nachgeputzt, in einer Sulfitlösung sulfitiert, bei einer Sulfitkonzentration von ca. 0,03%, in Scheiben von 10 bis 15 mm Dicke geschnitten und in strömendem Dampf bei ca. 100°C ca. 40 min lang gegart und dann in bekannter Weise püriert.

Den pürierten Kartoffeln werden 25%, bezogen auf pürierte Kartoffeln, einer Suspension von 65% Wasser, 33% Magermilchpulver und 2% Speisesalz zugesetzt. Weiterhin werden 3% Emulgatorlösung, bestehend aus handelsüblichen Mono- und Diglyzeriden, bezogen auf pürierte Kartoffeln, sowie 4% Butterfett, ebenfallls bezogen auf pürierte Kartoffeln, zugesetzt. Alle Komponenten werden in einem Mischer gut gemischt und das Püree wird dann zu zylinderförmigen Teilchen auf einem Extruder ausgeformt und diese Teilchen in bekannter Weise in Granulate von Erbsen- bis Haselnussgrösse gebrochen (beim Austritt aus dem Extruder).

Die Püreeteilchen werden in einem $CO_2$-Tunnel auf einem Förderband in loser Schüttung (also in einlagiger Schicht sich nicht berührender Teilchen) vorgefrostet und die vorgefrosteten Teilchen werden an der ganzen Oberfläche mit vorgekühltem Wasser von 1 bis 2°C besprüht, wobei das Band zweckmässig eine Rüttelstelle durchläuft, damit auch die aufliegende Unterseite freigelegt und mit einer Eisschicht versehen wird. Das Band mit den Teilchen fährt dann zum Nachfrosten wieder in einen $CO_2$-Tunnel und die aus diesem Tunnel austretenden nachgefrosteten Teilchen werden abgepackt.

Als Alternative kann das Förderband mit den darauf liegenden vorgefrosteten Teilchen in einer Ausbuchtung nach unten einen Vorrat an tiefkaltem Wasser durchlaufen und dabei einen schnell gefrierenden Oberflächenfilm aus Wasser aufnehmen und dann in den Nachfrostertunnel einfahren.

Das so hergestellte Tiefkühlpüree kann in 3 bis 5 min zu einem verzehrfertigen Püree angemacht werden, das in seinen sensorischen Eigenschaften dem haushaltmässig hergestellten Kartoffelpüree entspricht, und zwar durch blosses Erhitzen im Topf auf der Heizplatte. Es ist keinerlei Zusatz (Milch oder Wasser) erforderlich und nachdem zuerst die Eisschicht auf den Teilchen schmilzt, tritt kein Anbrennen auf.

## Patentansprüche

1. Verfahren zur Herstellung eines tiefgefrorenen Kartoffelpürees servierfertiger Zusammensetzung mit üblichem Zusatz von Milch- und Fettbestandteilen sowie gegebenenfalls Emulgator und Butterfett, wobei gegarte, pürierte Kartoffeln mit den Zusatzstofen vermischt, die Mischung extrudiert, zu kleinstückigen Teilchen ausgeformt und die Teilchen mit einer Eisschicht versehen und eingefroren werden, dadurch gekennzeichnet, dass die Teilchen zunächst so vorgefrostet werden, dass eine mindestens 2 bis 3 mm dicke, durchgefrorene Randschicht entsteht, die Teilchen dann mit sehr kaltem Wasser von 0 bis 5°C behandelt und anschliessend tiefgefroren und gegebenenfalls abgepackt werden, wobei die bei Behandlung mit sehr kaltem Wasser entstehende Eisschicht so bemessen wird, dass sie die gegenüber dem Fertigpüree fehlende Wassermenge ausmacht.

2. Verfahren nach Anspruch 1, dadurch gekennzeichnet, dass als sehr kaltes Wasser solches nahe am Gefrierpunkt, vorzugsweise 0 bis 3°C und insbesondere 1 bis 2°C verwendet werden.

3. Verfahren nach Anspruch 1 oder 2, dadurch gekennzeichnet, dass die gefrorenen Püreeteilchen in loser Schüttung mit sehr kaltem Wasser besprüht oder darin getaucht werden.

4. Verfahren nach einem der Ansprüche 1 bis 3, dadurch gekennzeichnet, dass dem Püree vor dem Gefrieren statt Milch oder verhältnismässig verdünnten Magermilchlösungen eine verhältnismässig konzentrierte Magermilchlösung, insbesondere eine mit bis zu 70% Wasser, zugesetzt wird.

5. Verfahren nach Anspruch 4, dadurch gekennzeichnet, dass eine Magermilchlösung oder Suspension mit 60 bis 70% Wasser, 30 bis 36% Magermilchpulver und 2 bis 4% Speisesalz eingesetzt wird.

6. Verfahren nach einem der Ansprüche 1 bis 5, dadurch gekennzeichnet, dass 20 bis 30%, bezogen auf pürierte Kartoffeln, an gelösten Milchbestandteilen zugesetzt werden.

7. Verfahren nach Anspruch 1 bis 6, dadurch gekennzeichnet, dass in an sich bekannter Weise 1 bis 3% Emulgator und gegebenenfalls ca. 4% flüssiges Butterfett, beides bezogen auf pürierte Kartoffeln, zugesetzt werden.

8. Verfahren nach Anspruch 1 bis 7, dadurch gekennzeichnet, dass die nachgefrorenen Püreeteilchen in loser Schüttung abgepackt werden.

9. In servierfertiger Zusammensetzung tiefgefrorenes Kartoffelpüree, hergestellt gemäss einem Verfahren nach einem oder mehreren der Ansprüche 1 bis 8.

## Claims

1. Method for the preparation of deep-frozen pureed potatoes of ready-to-serve composition containing milk and fat constituents as the conventional added ingredients and, if required, emulsifier and butter fat, cooked, pureed potatoes being mixed with the added ingredients, the mixture being extruded and shaped into small-size particles and the particles being provided with a layer of ice and frozen, characterised in that the particles are initially prefrozen in a manner such that a completely frozen edge layer at least 2 to 3 mm thick is formed, the particles are then treated with very cold water at 0 to 5°C and are then deep-frozen and packaged, if required, the quantity of the layer of ice which forms on treatment with very cold water being such that it makes up the amount of water which is lacking in the finished puree.

2. Method according to Claim 1, characterised in that the very cold water used is water which is near the freezing point, preferably at 0 to 3°C and in particular at 1 to 2°C.

3. Method according to Claim 1 or 2, characterised in that the frozen puree particles in bulk form are sprayed with very cold water or are immersed in the latter.

4. Method according to one of claims 1 to 3, characterised in that a relatively highly concentrated skimmed milk solution, in particular one which contains up to 70% of water, is added to the puree, instead of milk or relatively dilute skimmed milk solutions, before freezing.

5. Method according to Claim 4, characterised in that a skimmed milk solution or suspension containing 60 to 70% of water, 30 to 36% of skimmed milk powder and 2 to 4% of cooking salt is added.

6. Method according to one of Claims 1 to 5, characterised in that 20 to 30%, relative to pureed potatoes, of dissolved milk constituents are added.

7. Method according to Claims 1 to 6, characterised in that 1 to 3% of emulsifier and, if required, about 4% of liquid butter fat, in each case relative to pureed potatoes, are added in a manner known per se.

8. Method according to Claims 1 to 7, characterised in that the post-frozen puree particles in bulk form are packaged.

9. Deep-frozen pureed potatoes of ready-to-serve composition, prepared by a method according to one or more of Claims 1 to 8.

## Revendications

1. Procédé de fabrication d'une purée de pommes de terre surgelée de composition prête au service avec addition courante de composants lactés et gras ainsi qu'éventuellement d'agent émulsionnant et de butyrine, procédé dans lequel on mélange des pommes de terre cuites, transformées en purée avec les adjuvants, on extrude le mélange, on l'amène en forme de petites particules, on garnit les particules d'une couche de glace et on les congèle, caractérisé en ce que les particules sont tout d'abord prégelées de façon à obtenir une couche marginale gelée d'une épaisseur d'au moins 2 à 3 mm, les particules étant ensuite traitées par de l'eau très froide de 0 à 5°C et puis surgelées et éventuellement emballées, la couche de glace formée lors du traitement par de l'eau très froide étant mesurée de façon qu'elle représente la quantité d'eau qui fait défaut vis-à-vis de la purée finie.

2. Procédé suivant la revendication 1, caractérisé en ce que, comme eau très froide, on utilise de l'eau proche du point de congélation, de préférence d'une température de 0 à 3°C et en particulier de 1 à 2°C.

3. Procédé suivant l'une des revendications 1 et 2, caractérisé en ce que les particules gelées de purée sont pulvérisées par de l'eau très froide ou immergées dans celle-ci sous la forme d'un vrac non cohérent.

4. Procédé suivant l'une des revendications 1 à 3, caractérisé en ce qu'à la purée on ajoute, avant la congélation, au lieu de lait ou de solutions de lait maigre relativement diluées, une solution de lait maigre relativement concentrée, en particulier une solution contenant jusqu'à 70% d'eau.

5. Procédé suivant la revendication 4, caractérisé en ce qu'une solution ou suspension de lait maigre contenant 60 à 70% d'eau, 30 à 36% de poudre de lait maigre et 2 à 4% de sel de cuisine est mise en œuvre.

6. Procédé suivant l'une des revendications 1 à 5, caractérisé en ce qu'on ajoute 20 à 30%, par rapport aux pommes de terre transformées en purée, de composants lactés dissous.

7. Procédé suivant l'une des revendications 1 à 6, caractérisé en ce que, d'une manière connue en soi, on ajoute 1 à 3% d'agent émulsionnant et éventuellement 4% de butyrine fluide, tous deux par rapport aux pommes de terre transformées en purée.

8. Procédé suivant l'une des revendications 1 à 7, caractérisé en ce que les particules de purée congelées ultérieurement sont emballées sous la forme d'un vrac non cohérent.

9. Purée de pommes de terre surgelée de composition prête à être servie, telle que préparée d'après un procédé suivant une ou plusieurs des revendications 1 à 8.